(19) Europäisches Patentamt
European Patent Office
Office européen des brevets

(11) **EP 2 962 757 B1**

(12) **FASCICULE DE BREVET EUROPEEN**

(45) Date de publication et mention
de la délivrance du brevet:
**20.01.2021 Bulletin 2021/03**

(21) Numéro de dépôt: **15174431.5**

(22) Date de dépôt: **30.06.2015**

(51) Int Cl.:
*B01J 37/02* (2006.01)  *B01J 23/882* (2006.01)
*B01J 23/883* (2006.01)  *B01J 23/888* (2006.01)
*B01J 33/00* (2006.01)  *B01J 35/00* (2006.01)
*C10G 45/08* (2006.01)

(54) **PROCÉDÉ D'ENROBAGE POUR LIMITER L'AUTO-ÉCHAUFFEMENT DE CATALYSEURS ACTIVÉS**

BESCHICHTUNGSVERFAHREN ZUR BEGRENZUNG DER EIGENERWÄRMUNG VON AKTIVIERTEN KATALYSATOREN

COATING METHOD FOR LIMITING THE SELF-HEATING OF ACTIVATED CATALYSTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2014 FR 1456359**

(43) Date de publication de la demande:
**06.01.2016 Bulletin 2016/01**

(73) Titulaire: **Eurecat S.A.**
**07800 La Voulte-sur-Rhône (FR)**

(72) Inventeurs:
• **Dufresne, Pierre**
**26400 AOUSTE SUR SYE (FR)**
• **Galliou, Pauline**
**07800 SAINT LAURENT DU PAPE (FR)**
• **Baffert, Mathieu**
**07500 GUILHERAND GRANGES (FR)**
• **Kirumakki, Sharath**
**FRIENDSWOOD, TEXAS, 77546 (US)**

(74) Mandataire: **Casalonga**
**Casalonga & Partners**
**Bayerstraße 71/73**
**80335 München (DE)**

(56) Documents cités:
**EP-A1- 0 311 508     EP-A1- 0 897 748**
**EP-A1- 2 781 262     US-A- 2 976 253**

EP 2 962 757 B1

**Description**

La présente invention concerne un procédé d'enrobage visant à limiter l'auto-échauffement des catalyseurs activés notamment lors de leur stockage, leur manipulation et leur transport.

Le procédé selon l'invention permet également de limiter les gaz toxiques susceptibles d'être émis par ces catalyseurs.

Les catalyseurs qui peuvent être traités par le procédé selon la présente invention sont par exemple, mais non limitativement, ceux employés dans les procédés de traitements d'hydrocarbures, en particulier dans les domaines du raffinage pétrolier et de la pétrochimie, et plus particulièrement dans les procédés d'hydroconversion d'hydrocarbures.

Les procédés de traitement des hydrocarbures effectués dans les raffineries et/ou les unités de pétrochimie incluent un certain nombre de traitements réalisés éventuellement en présence d'hydrogène, qui sont destinés à modifier la structure des molécules d'hydrocarbures et/ou à éliminer des coupes hydrocarbonées des composés indésirables tels que notamment les composés soufrés, azotés, aromatiques, métalliques. Peuvent être cités, à titre d'exemples non limitatifs, les procédés d'hydrocraquage ou d'hydroconversion, de réformage, d'isomérisation, d'alkylation, d'hydrogénation, de déshydrogénation et les procédés dits d'hydrotraitement tels que les procédés d'hydrodésulfuration, d'hydrodéazotation, d'hydrodéaromatisation, d'hydrodémétallation, d'hydrodéoxygénation.

La plupart de ces procédés de traitement d'hydrocarbures font appel à des catalyseurs solides qui se présentent sous forme de particules également dénommées « grains de catalyseurs ». Ces particules de catalyseurs comprennent un support poreux à base d'un ou plusieurs oxydes inorganiques réfractaires, sur lequel sont déposés un ou plusieurs métaux catalytiquement actifs. Ces métaux comprennent le plus souvent un ou plusieurs métaux du groupe VIII de la classification périodique des éléments, et/ou un ou plusieurs métaux du groupe VIB.

La cinétique des réactions de traitement d'hydrocarbures est entre autres limitée par la vitesse de diffusion des molécules d'hydrocarbures (souvent de taille importante) vers les sites catalytiques situés dans les pores du catalyseur. C'est pourquoi les fabricants s'efforcent de préparer des catalyseurs présentant une surface spécifique et une porosité la plus importante possible, ce qui conduit à des catalyseurs se présentant sous forme de particules de petite taille.

A l'issue de la fabrication du catalyseur, ou à l'issue de sa régénération dans le cas d'un catalyseur déjà utilisé, les métaux actifs se présentent sous forme d'oxydes métalliques qui, en tant que tels, ne sont pas actifs.

Pour permettre aux catalyseurs d'être actifs dans les différents procédés de traitement d'hydrocarbures, il est nécessaire de procéder à une activation du catalyseur, c'est à dire à un traitement de celui-ci afin de transformer les oxydes métalliques en espèces métalliques actives.

Ainsi, dans le cas des catalyseurs d'hydrotraitement d'hydrocarbures, l'activation se fait généralement par sulfuration du catalyseur, qui consiste à effectuer un traitement de celui-ci au moyen de composés soufrés, dans le but de transformer au moins partiellement les oxydes métalliques en sulfures mixtes, qui constituent la phase active du catalyseur.

Cette étape d'activation est particulièrement importante, puisqu'elle conditionne l'activité du catalyseur dans son utilisation ultérieure.

Cette activation des catalyseurs peut être effectuée in situ (c'est-à-dire, directement dans le réacteur dans lequel le catalyseur est employé, avant le démarrage de celui-ci), ou ex situ (c'est-à-dire hors du réacteur).

Afin d'optimiser la rentabilité des unités, et en particulier de diminuer leur temps d'arrêt lors des opérations de renouvellement du catalyseur dans les réacteurs lorsque celui-ci est usagé, les traitements d'activation des catalyseurs sont de plus en plus souvent effectués ex situ.

Ainsi, les catalyseurs sont activés dans des unités de traitement spéciales mettant en œuvre des composés soufrés, puis peuvent être stockés pendant des durées plus ou moins longues pouvant aller parfois jusqu'à quelques mois, avant d'être transportés vers le réacteur dans lequel ils seront chargés.

Cependant, les catalyseurs activés présentent l'inconvénient d'être particulièrement instables chimiquement. Les sites métalliques activés sont particulièrement sensibles, et réagissent par exemple au contact de l'air. Ainsi, dans le cas des catalyseurs sulfurés, les sulfures métalliques présents à la surface des particules de catalyseur sont réactifs, et donnent lieu à des réactions d'oxydation exothermiques qui peuvent conduire à la formation de $SO_2$, qui est un gaz toxique.

Cette formation de $SO_2$ est un phénomène qui représente un risque pour le personnel présent lors du chargement. Ce gaz peut se former par exemple dans le réacteur, dès le moment qu'une petite partie du lit de catalyseur subit un phénomène d'auto-échauffement. Or, le seuil limite d'exposition tolérable sur une courte durée est très faible (5 ppm).

Les catalyseurs activés sont également connus pour donner lieu à des phénomènes d'auto-échauffement, et des précautions particulièrement contraignantes doivent être prises lors de leur stockage, leur transport et leur manipulation.

Les propriétés auto-échauffantes d'un matériau peuvent être caractérisées par un test international, décrit par l'UN (test décrit dans le document « Recommendation on the transport of dangerous goods. Manual for Tests and Criteria », ISSN 1014-7160, Section 33.3). Ce test décrit une procédure de mesure du grade d'auto-échauffement d'un échantillon, qui est effectuée en boîte de 1L à différentes températures (100, 120 ou 140°C) pour définir la catégorie dans laquelle le matériau sera placé. Dans certains cas, une procédure utilisant une boîte plus petite de 15mL peut également être utilisée.

Les catalyseurs auto-échauffants doivent, pour éviter tout risque, être maintenus sous atmosphère inerte, par exemple sous azote. Ainsi, les opérations de chargement de catalyseurs activés dans les réacteurs se font en général sous azote, ce qui complique sensiblement ces opérations, et génère des coûts additionnels non négligeables.

En outre, malgré toutes ces précautions, le stockage, le transport et la manipulation des catalyseurs activés restent particulièrement dangereuse en raison de leur caractère auto-échauffant, et le risque pour le personnel et les équipements au contact de ces catalyseurs demeure important.

Il existe donc un besoin de trouver de nouvelles solutions, qui permettent d'une part de diminuer le plus possible les risques induits par l'emploi de ces catalyseurs activés, et d'autre part de s'affranchir de la nécessité de les conserver en atmosphère inerte, tout en limitant de manière importante les potentielles émissions de gaz toxiques.

A cet effet, un certain nombre de solutions ont été proposées dans l'art antérieur.

Il a par exemple été proposé, par exemple dans les brevets US 5,681,787 et US 3,453,217 de remplir de manière plus ou moins complète la porosité des particules de catalyseur, au moyen de composés destinés à protéger les sites actifs, le plus souvent des hydrocarbures. Le document EP0897748 A1 décrit un procédé de passivation d'un catalyseur sous forme de particules destiné au raffinage ou a l'hydroconversion d'hydrocarbures, qui consiste a enrober la surface externe des particules de catalyseur d'une couche protectrice de matériau d'enrobage inerte et éliminable dans le réacteur aux conditions de la réaction. Les exemples décrivent un procédé dans lequel une solution de polymère est pulvérisée sur les particules de catalyseur en rotation dans un tonneau d'acier, dont les parois sont pleines c'est-a-dire non perforées.

Toutefois, les solutions proposées dans l'art antérieur ne sont pas suffisamment satisfaisantes.

En particulier, elles ne permettent pas toujours de diminuer suffisamment le caractère auto-échauffant des catalyseurs activés, au regard des normes actuelles particulièrement strictes. De plus, ces solutions ne permettent pas de réduire de manière significative les émissions de gaz nocifs.

Souvent, elles nécessitent pour protéger efficacement le catalyseur de déposer une couche relativement épaisse de matériau protecteur, ce qui diminue en conséquence la densité de chargement du catalyseur dans le réacteur, et diminue donc le rendement de ce dernier. En effet, la place occupée par cette couche augmente sensiblement le diamètre effectif du grain, donc le volume occupé par chaque grain. Le volume du réacteur à charger, nécessairement limité, est donc, dans le cas d'un catalyseur enrobé, partiellement occupé par la matière protectrice, et ce d'autant plus que l'épaisseur de la couche de catalyseur est importante. Les performances d'un lit de catalyseur étant proportionnelles à la quantité de matière catalytique active, elles peuvent donc être significativement diminuées si la couche d'enrobage est trop importante, ce qui n'est pas tolérable. De plus, lors de l'élimination de la couche de matériau protecteur, le volume occupé par celle-ci est libéré. Si ce volume occupé est important, le lit de catalyseur va se modifier, ce qui est susceptible de générer des chemins préférentiels pour la charge circulant au travers du lit, ce qui est contraire aux exigences d'une parfaite distribution de la charge au travers du lit de catalyseur dans le réacteur, et s'avère particulièrement préjudiciable pour les performances de l'unité.

La présente invention vise à proposer une méthode qui permette d'une part de limiter de manière efficace les phénomènes d'auto-échauffement des catalyseurs activés, et d'autre part de remédier aux inconvénients des méthodes de l'art antérieur.

La Demanderesse a découvert de manière inattendue que cet objectif était atteint au moyen d'un procédé dans lequel les particules de catalyseur activé sont recouvertes d'une très fine couche protectrice de polymère filmogène, au moyen d'un procédé particulier dans lequel les particules sont maintenues en mouvement au sein d'un flux de gaz chaud tandis qu'une composition liquide contenant le polymère filmogène est pulvérisée sur lesdites particules.

De préférence, la pulvérisation se fait à l'aide d'une buse d'atomisation, dans laquelle la composition liquide est mélangée avec un gaz sous pression, de préférence de l'air comprimé, permettant l'obtention de très fines gouttes.

Le procédé selon l'invention a pour objectif de former une couche continue d'un matériau protecteur à la surface externe des grains de catalyseur. Le principe de base qui consiste à protéger un catalyseur par un matériau protecteur a déjà été décrit dans l'art antérieur, mais l'obtention d'un catalyseur répondant aux exigences décrites ci-avant est très complexe. La Demanderesse a ainsi découvert que, pour répondre de manière efficace à toutes ces exigences, il était nécessaire d'associer des matériaux protecteurs particuliers à base de polymères filmogènes avec un procédé d'enrobage d'une grande précision.

La présente invention a ainsi pour objet un procédé d'enrobage visant à limiter l'auto-échauffement de catalyseurs activés sous forme de particules, dans lequel les particules de catalyseur sont placées en mouvement soit dans un tambour perforé traversé en continu par un flux de gaz de température supérieure a 25°C soit en lit fluidisé au moyen d'un flux de gaz de température supérieure a 25°C, tandis qu'une composition liquide contenant un ou plusieurs polymère(s) filmogène(s) est pulvérisée sur les particules en mouvement, jusqu'à l'obtention sur la surface desdites particules d'une couche protectrice contenant ledit polymère filmogène et présentant une épaisseur moyenne allant de 0,1 a 20 μm.

Le procédé selon la présente invention permet de remédier aux inconvénients des procédés décrits dans l'art antérieur.

Les catalyseurs activés traités au moyen du procédé de l'invention voient leurs propriétés auto-échauffantes diminuées de manière très importante.

En outre, la Demanderesse a constaté que, de manière surprenante, le procédé selon l'invention permettait de réduire de manière particulièrement efficace les émissions de gaz toxiques.

Les catalyseurs traités au moyen du procédé de l'invention peuvent ainsi être stockés ou transportés en grandes quantités par exemple dans des sacs ou containers de volume important, et manipulés (par exemple, chargés dans des réacteurs) sans précautions particulières.

En outre, la Demanderesse a constaté que le procédé selon l'invention permettait de préserver une bonne efficacité des unités auxquelles est destiné le catalyseur activé, sans qu'il n'y ait de perte d'activité substantielle résultant du chargement de grains de catalyseur recouverts d'une couche protectrice.

Enfin, la mise en œuvre d'une telle protection n'affecte pas l'activité du catalyseur activé, qui une fois débarrassé de la couche protectrice conserve toute son activité.

Conformément à l'invention, les particules de catalyseur activé sont recouvertes d'une couche protectrice comprenant un ou plusieurs polymère(s) filmogène(s).

Par "polymère", on entend au sens de l'invention des composés comportant au moins deux motifs de répétition, de préférence au moins trois motifs de répétition et plus spécialement au moins dix motifs répétitifs.

Par "polymère filmogène", on désigne, de manière connue en soi, un polymère apte à former à lui seul ou en présence d'un agent auxiliaire de filmification, un film macroscopiquement continu sur un support, notamment sur les matériaux à base d'oxydes inorganiques tels que par exemple l'alumine.

La couche protectrice selon l'invention peut comprendre un ou plusieurs polymère(s) filmogène(s) en mélange avec un ou plusieurs autre(s) composé(s) lesquels peuvent être polymérique(s) ou non polymérique(s). Les autres composés, polymériques ou non, susceptibles d'être présents dans la couche protectrice selon l'invention, sont alors introduits en mélange avec le ou les polymère(s) filmogène(s), dans la composition liquide pulvérisée sur les particules en mouvement.

La couche protectrice peut également être entièrement constituée d'un ou plusieurs polymère(s) filmogène(s).

De préférence, la couche protectrice selon l'invention comprend de 50 à 100% en poids d'un ou plusieurs polymère(s) filmogène(s). De manière particulièrement préférée, la couche protectrice selon l'invention est entièrement constituée d'un ou plusieurs polymère(s) filmogène(s).

De préférence, le ou les polymère(s) filmogène(s) employés dans la présente invention sont choisis parmi :

- les homo et co-polymères d'alcool vinylique, tels que les alcools polyvinyliques et les copolymères formés de monomères alcool vinylique et oléfine(s), tels que copolymères formés de monomères alcool vinylique et éthylène (copolymères EVOH);
- les homo et co-polymères d'alcool vinylique partiellement hydrolysés, c'est-à-dire contenant encore des motifs acétate de vinyle non hydrolysés ;
- les polyéthylène glycols ;
- le collagène ;
- les polyéthylène téréphtalates (PET) ;
- les polyéthylène naphtalates (PEN) ;
- les polyamides ;
- les polysaccharides, en particulier les polymères cellulosiques et leurs dérivés (parmi lesquels on préfère en particulier les $C_1$-$C_4$ alkyl-celluloses et plus particulièrement les méthyl-celluloses), et les amidons éventuellement modifiés ;
- les polychlorure de vinyles (PVC) ;
- les polychlorure de vinylidènes (PVDC) ;
- les polyacrylonitriles (PAN) ;
- les résines de polyacrylates, telles qu'en particulier les polyacrylates de méthyle ;
- les copolymères dont au moins un des monomères est de type acrylate ;
- et leurs mélanges.

Les alcools polyvinyliques et les copolymères formés de monomères alcool vinylique et oléfine(s) sont particulièrement préférés. Parmi ces derniers, on préfère tout particulièrement les copolymères formés de monomères alcool vinylique et éthylène ou copolymères EVOH.

Selon l'invention, la pulvérisation de composition liquide contenant le(les) polymère(s) filmogène(s) est poursuivie jusqu'à l'obtention sur la surface des particules d'une couche protectrice présentant une épaisseur moyenne définie (en tout état de cause, inférieure ou égale à 20 μm), ce qui signifie que lorsque la couche protectrice d'épaisseur désirée telle que définie ci-après est obtenue, cette pulvérisation est stoppé.

L'épaisseur moyenne de la couche protectrice selon l'invention est inférieure ou égale à 20 μm, et de préférence inférieure ou égale à 10 μm.

L'épaisseur moyenne de la couche protectrice va de 0,1 à 20 μm, encore plus préférentiellement de 0,2 à 10 μm, et mieux encore de 0,5 à 8 μm.

L'épaisseur moyenne de la couche recouvrant les particules de catalyseur peut être déterminée par microscopie électronique à balayage.

Selon la présente invention, la quantité de polymère filmogène employée doit être suffisante pour permettre de recouvrir les particules de catalyseur de manière la plus complète possible, tout en veillant à ce que la couche protectrice reste la plus fine possible.

A cet effet, la quantité totale de polymère filmogène employé va avantageusement de 0,1 à 6 % en poids, de préférence de 0,5 à 4 % en poids, et de manière encore plus préférée de 1 à 3 % en poids, par rapport au poids total du catalyseur initial.

Par poids total du catalyseur initial, on désigne ici le poids du catalyseur activé non protégé, c'est-à-dire avant recouvrement par la couche protectrice selon l'invention.

Le ou les polymère(s) filmogène(s) ainsi que le ou les autres composés éventuellement présents dans la couche protectrice selon l'invention sont déposés sur le catalyseur par pulvérisation d'une composition liquide les contenant.

Selon un premier mode de réalisation, la composition liquide pulvérisée sur les particules de catalyseur contient un solvant choisi parmi l'eau, un solvant organique ou un mélange d'eau et de solvant organique, ainsi que le ou les polymère(s) filmogène(s) sous forme dissoute ou sous forme dispersée dans ledit solvant. Elle peut également contenir le cas échéant un ou plusieurs agents stabilisants.

Dans ce cas, où la composition liquide est une solution ou une dispersion de polymère filmogène dans un solvant, ladite composition contient avantageusement de 0,1 à 50% en poids de polymère filmogène, de préférence de 0,5 à 25% en poids, et plus préférentiellement de 1 à 10% en poids de polymère filmogène, par rapport au poids total de la composition.

Dans le cas d'une dispersion du ou des polymère(s) filmogène(s) dans un solvant, la taille des particules de polymère dispersé est avantageusement inférieure ou égale à 500 nm et de préférence inférieure ou égale à 200 nm.

Selon un second mode de réalisation, la composition liquide pulvérisée sur les particules de catalyseur contient le ou les polymère(s) filmogène(s) à l'état fondu. En particulier, la composition liquide pulvérisée sur les particules de catalyseur peut être entièrement constituée du ou des polymère(s) filmogène(s) à l'état fondu.

Selon l'invention, les particules de catalyseur sont placées en mouvement au sein d'un flux de gaz chaud les traversant, c'est-à-dire au sein d'un flux de gaz passant au travers de la masse des particules en mouvement.

Selon une première variante, le procédé selon l'invention est mis en œuvre dans un tambour perforé dans lequel les particules de catalyseur sont mises en mouvement, et le tambour perforé est traversé en continu par un flux de gaz chaud.

Selon une seconde variante, le procédé selon l'invention est mis en œuvre en plaçant les particules de catalyseur en lit fluidisé au moyen du flux de gaz chaud. Dans cette variante, le procédé selon l'invention peut être réalisé en batch ou en continu.

Le flux de gaz chaud traversant les particules de catalyseur en mouvement peut être constitué de tout gaz ou mélange gazeux. De préférence, il s'agit d'un flux d'air.

Par flux de gaz « chaud », on entend un flux de gaz dont la température est supérieure à la température ambiante, c'est-à-dire supérieure à 25°C.

Avantageusement, le flux de gaz traversant les particules de catalyseur présente une température allant de 30 à 150°C, et de préférence de 50 à 100°C.

Le débit du flux de gaz est avantageusement de 5 à 100 m³ par heure et par kilogramme de catalyseur.

La composition contenant le ou les polymère(s) filmogène(s) est pulvérisée sous forme de fines gouttelettes, de préférence de manière continue, sur les particules de catalyseur en mouvement.

De manière préférée, la pulvérisation se fait par atomisation, c'est-à-dire par pulvérisation de la composition liquide en mélange avec un gaz sous pression, de préférence de l'air comprimé.

D'une manière générale, la composition liquide est avantageusement pulvérisée à une température allant de 25 à 200°C.

Dans le cas où la composition liquide contient le ou les polymère(s) filmogène(s) sous forme dissoute ou dispersée dans un solvant, ladite composition est de préférence pulvérisée à une température allant de 25 à 100°C.

Dans le cas où la composition liquide contient le ou les polymère(s) filmogène(s) à l'état fondu, ladite composition est de préférence pulvérisée à une température allant de 50 à 150°C.

Dans le cas où le procédé selon l'invention est réalisé dans un tambour perforé, la pulvérisation se fait de préférence sur la surface supérieure du lit de catalyseur.

Dans le cas où le procédé selon l'invention est réalisé en plaçant les particules de catalyseur en lit fluidisé, la pulvérisation peut se faire soit sur la surface supérieure du lit de catalyseur, soit directement à l'intérieur du lit.

Les procédés décrits ci-avant permettent la formation d'une couche protectrice continue à la surface externe des grains, ce qui garantit une efficacité maximale du procédé selon l'invention.

Après recouvrement des grains de catalyseur au moyen d'une couche protectrice selon l'invention, lesdits grains peuvent être séchés si nécessaire, par exemple à l'air libre ou en présence d'un flux gazeux d'air ou de tout autre gaz approprié.

Le procédé selon la présente invention peut s'appliquer à tout catalyseur activé solide se présentant sous forme de particules, tels que ceux destinés au traitement des charges hydrocarbures notamment dans les domaines du raffinage pétrolier et de la pétrochimie.

Par « catalyseur activé », on désigne dans la présente invention des catalyseurs contenant des sites actifs susceptibles de réagir spontanément, par exemple au contact de l'air et/ou de l'humidité.

Les sites actifs peuvent être en particulier des sulfures métalliques dans le cas des catalyseurs d'hydrotraitement.

Le procédé selon l'invention s'applique tout particulièrement à la protection des catalyseurs activés d'hydroconversion d'hydrocarbures. Ces catalyseurs se présentent sous forme de particules qui comprennent un support d'oxyde réfractaire sur lequel est déposé au moins un sulfure de métal choisi parmi les métaux du groupe VIII et les métaux du groupe VIB de la Classification Périodique des Eléments.

De préférence, les catalyseurs contiennent au moins un métal du groupe VIII de la classification périodique des éléments, tel que par exemple le cobalt, le nickel, le fer, le palladium, le platine. Ces métaux peuvent être associés à au moins un métal du groupe VIB tel que par exemple le molybdène, le tungstène, le chrome. La teneur en métal ou métaux du groupe VIII est généralement comprise entre 0,1 et 20% en poids par rapport au poids total du catalyseur non protégé, parfois jusqu'à 50%. La teneur en métal ou métaux du groupe VIB est généralement comprise entre 3 et 30% en poids par rapport au poids total du catalyseur (sous forme non protégée).

De préférence, le support des catalyseurs est choisi parmi les alumines, les silices, les silice-alumines amorphes ou cristallisées (zéolithes). Plus préférentiellement, le support contient au moins 30% en poids, et mieux encore au moins 50% en poids, d'alumine.

Le procédé selon l'invention est particulièrement approprié pour traiter des catalyseurs contenant l'une des associations métalliques suivantes : CoMo, NiMo, NiW, NiCoMo, déposée sur un support à base d'alumine.

Ces catalyseurs peuvent contenir un ou plusieurs additifs tels que des additifs organiques, des composés halogénés, borés, phosphorés.

Les catalyseurs visés par l'invention se présentent sous la forme de particules de formes variables, préférentiellement sphérique, cylindrique, ou multilobes, et dont la dimension moyenne maximale en nombre ne dépasse généralement pas 5 mm.

Pour les particules de catalyseur de forme cylindrique ou multilobes, le diamètre moyen en nombre va généralement de 0,8 à 4 mm et la longueur moyenne en nombre va généralement de 2,5 à 5 mm. Dans certaines applications, des grains de forme sphérique sont utilisés, dont le diamètre moyen en nombre varie en général de 1,5 à 5 mm.

Les dimensions moyennes en nombre des grains de catalyseur peuvent être déterminées, de manière connue en soi, par vidéogranulométrie ou à l'aide d'un pied à coulisse. On peut typiquement utiliser le vidéo-granulomètre CAMSIZER, développé par la société RETSCH.

Ces catalyseurs peuvent présenter une surface spécifique, mesurée par la méthode BET, généralement comprise entre 100 et 300 $m^2$/g, un volume poreux, déterminé par adsorption d'azote, allant de 0,20 à 1 ml/g, et un diamètre de pores moyen, déterminé par adsorption d'azote, allant de 7 à 20 nm.

Le procédé selon la présente invention s'applique tant à des catalyseurs neufs sur lesquels a été fait un traitement d'activation, c'est-à-dire des catalyseurs qui n'ont encore jamais été employés, qu'à des catalyseurs régénérés activés, c'est-à-dire des catalyseurs usés qui ont été régénérés afin de les débarrasser de leurs résidus hydrocarbonés (coke) et leur restituer un niveau d'activité permettant de les réutiliser, et qui ont ensuite été activés lors d'une étape successive.

Il convient de noter que, même si dans le présent exposé le procédé selon l'invention est décrit au regard des catalyseurs particuliers employés dans les procédés de traitements d'hydrocarbures, elle peut être mise en œuvre pour protéger tout catalyseur se présentant sous forme de particules solides, présentant à sa surface des sites actifs particulièrement fragiles et/ou réactifs et/ou susceptibles de produire des gaz toxiques.

La déprotection des particules de catalyseur s'effectue de préférence une fois que celles-ci ont été chargées dans le réacteur dans lequel elles sont employées.

Elle est effectuée en plaçant le catalyseur dans des conditions dans lesquelles la couche de matériau présente à la surface des particules s'élimine.

De manière particulièrement préférée, le ou les polymère(s) filmogène (s) employé(s) dans la présente invention sont choisis de telle sorte qu'il(s) s'élimine(nt) spontanément au contact de la charge lors du démarrage du réacteur dans lequel est mis en œuvre le catalyseur. Ce mode de réalisation permet d'enlever, de manière particulièrement simple et économique, la couche protectrice recouvrant le catalyseur au moment du démarrage du réacteur.

Ainsi, le ou les polymère(s) filmogène(s) sont de préférence choisis parmi les polymères qui se décomposent ou qui sont lessivés par la charge aux températures comprises entre la température ambiante et la température de fonctionnement du réacteur, c'est-à-dire, typiquement, à une température allant de 25°C à 400°C, et à une pression allant de la pression atmosphérique à 20 MPa.

De manière plus préférée, le ou les polymère(s) filmogène(s) sont choisis parmi les composés qui se décomposent ou sont lessivés par la charge à une température allant de 50°C et 400°C, de préférence de 100 à 300°C et à une pression allant de 0,1 à 10 MPa.

Par charge on désigne, dans le cas des catalyseurs de traitement d'hydrocarbures, des coupes d'hydrocarbures ayant, typiquement, une gamme d'ébullition à pression atmosphérique comprise dans la plage allant de 75 à 650°C et pouvant être mises en contact avec le catalyseur à l'état liquide ou gazeux.

Les exemples qui suivent sont donnés à titre purement illustratif de la présente invention.

## EXEMPLES

Les exemples ci-après ont été réalisés à partir d'un catalyseur commercial d'hydrotraitement régénéré, qui contient 20% en poids de $MoO_3$, et 5% en poids de CoO sur support d'alumine, et qui se présente sous forme d'extrudés de forme cylindrique ayant un diamètre moyen en nombre de 1,3 mm et de longueur moyenne en nombre de 3,2 mm.

Activation du catalyseur : ce catalyseur a été introduit dans un four rotatif alimenté par un mélange gazeux sulfo-réducteur d'hydrogène et de sulfure d'hydrogène à des pressions partielles respectives de $0,8.10^5$ et $0,2.10^5$Pa, le gaz et le solide circulant à contre-courant. La sulfuration du solide est obtenue par augmentation progressive de la température lors du déplacement du solide à l'intérieur du tube tournant, jusqu'à une température maximale de 330°C, le temps de résidence à l'intérieur du four étant d'environ 4 heures. Après refroidissement du solide sous atmosphère réactionnelle et purge sous azote, celui-ci est mis au contact d'air dilué par l'azote de telle façon que sa température reste inférieure à 45°C.

Le catalyseur activé ainsi obtenu est ci-après désigné catalyseur A. Il présente une teneur en soufre de 10,2% en poids, ce qui correspond à une stoechiométrie de sulfuration des sites métalliques de 95%.

## Exemple 1 (conforme à l'invention) :

Le catalyseur A a été traité de la manière suivante :
3 kg du catalyseur A ont été placés dans un tambour perforé en inox ayant un volume de 18 litres (volume utile 5L), à une vitesse de rotation de 20 tours/ minute, traversé entièrement par un flux d'air chaud de 160 m³/h à 90°C pour maintenir le lit de catalyseur à 70°C pendant la pulvérisation. Le flux d'air chaud se fait parallèlement au jet de pulvérisation, et dans le même sens (flux descendant).

900g d'une solution de copolymère polyéthylène-alcool polyvinylique EVOH (commercialisé sous la dénomination EXCEVAL par la société Kuraray) à 5% en poids dans l'eau ont été injectés sur les particules de catalyseur au moyen d'une buse bi-fluide d'atomisation, avec un débit de solution de 7 g/min.

L'eau s'évapore en continu, ce qui conduit à la formation d'une couche de polymère à la surface des particules de catalyseur.

Après injection complète du liquide, le catalyseur est encore agité pendant 30 minutes à 70°C pour terminer son séchage, puis refroidi à température ambiante.

On a ainsi obtenu le catalyseur B selon l'invention, dont les particules sont recouvertes d'une couche continue de copolymère polyéthylène -alcool polyvinylique dont l'épaisseur moyenne est de 5 $\mu$m, telle qu'observée par microscopie électronique à balayage.

L'analyse du catalyseur B montre qu'il contient 0,9% en poids de carbone ce qui correspond à 1,5% en poids de polymère déposé sur le catalyseur par rapport au catalyseur de départ A.

## Exemple 2 (comparatif) :

Le catalyseur A a été traité de la manière suivante :
3 kg du catalyseur A ont été placés dans un tambour non perforé en inox ayant un volume de 18 litres (volume utile 5L), à une vitesse de rotation de 20 tours/minute, et un flux d'air chaud de 160m³/h à 95°C est dirigé sur la surface du lit de catalyseur pour le maintenir à 55°C pendant la pulvérisation. L'air chaud rentre par une arrivée située au sein du tambour, et ressort par l'ouverture située à l'avant du tambour, sans traverser le lit de catalyseur (lit léché), ce qui explique que l'échange de chaleur soit moins bon, et donc la température plus faible au sein du lit de catalyseur.

900g d'une solution de copolymère polyéthylène-alcool polyvinylique EVOH (commercialisé sous la dénomination EXCEVAL par la société Kuraray) à 5% en poids dans l'eau ont été injectés sur les particules de catalyseur au moyen d'une buse d'atomisation, avec un débit de solution de 5 g/min.

L'eau s'évapore en continu, ce qui conduit à la formation d'une couche de polymère à la surface des particules de catalyseur.

Après injection complète du liquide, le catalyseur est encore agité pendant 30 minutes à 55°C pour terminer son séchage, puis refroidi à température ambiante.

On a ainsi obtenu le catalyseur C non-conforme à l'invention, dont les particules sont recouvertes d'une couche non-continue de copolymère polyéthylène - alcool polyvinylique, dont l'épaisseur moyenne est de 6 $\mu$m telle qu'observée par microscopie électronique à balayage, mais qui présente des variations locales d'épaisseur très importantes. On constate en particulier l'existence de points à la surface des particules catalytiques où la présence d'une couche de polymère n'est pas détectable. Aux points où une couche de polymère est présente, l'épaisseur de celle-ci est très variable, allant de moins de 0,1 $\mu$m jusqu'à environ 15 $\mu$m.

L'analyse du catalyseur C montre qu'il contient 0,8% en poids de carbone ce qui correspond à 1,4% en poids de polymère déposé sur le catalyseur par rapport au catalyseur de départ A.

Exemple 3 (comparatif) :

Le catalyseur A a été traité de la manière suivante :
3 kg du catalyseur A ont été placés dans un tambour non perforé en inox ayant un volume de 18 litres (volume utile 5L), à une vitesse de rotation de 20 tours/minute, et un flux d'air chaud de 150m$^3$/h à 80°C est dirigé sur la surface du lit de catalyseur pour le maintenir à 50°C pendant la pulvérisation. L'air chaud rentre par une arrivée située au sein du tambour, et ressort par l'ouverture située à l'avant du tambour, sans traverser le lit de catalyseur (lit léché).

Une solution de 750 g de résine de polyacrylate à 20% en poids dans l'acétate d'éthyle a été injectée sur les particules de catalyseur au moyen d'une buse d'atomisation, avec un débit de solution de 4 g/min.

Le solvant s'évapore en continu, ce qui conduit à la formation d'une couche de polymère à la surface des particules de catalyseur.

Après injection complète du liquide, le catalyseur est encore agité pendant 15 minutes à 50°C pour terminer son séchage, puis refroidi à température ambiante.

On a ainsi obtenu le catalyseur D non-conforme à l'invention, dont les particules sont recouvertes d'une couche non-continue de résine de polyacrylate dont l'épaisseur moyenne est de 20$\mu$m, telle qu'observée par microscopie électronique à balayage, mais qui présente des variations locales d'épaisseur très importantes. On constate en particulier l'existence de points à la surface des particules catalytiques où la présence d'une couche de polymère n'est pas détectable. Aux points où une couche de polymère est présente, l'épaisseur de celle-ci est très variable, allant de moins de 0,1 $\mu$m jusqu'à environ 50 $\mu$m.

L'analyse du catalyseur D montre qu'il contient 3% en poids de carbone ce qui correspond à 5% en poids de polymère déposé sur le catalyseur par rapport au catalyseur de départ A.

Exemple 4 (conforme à l'invention) :

Le catalyseur A a été traité de la manière suivante :
3 kg du catalyseur A ont été placés dans un tambour perforé en inox ayant un volume de 18 litres (volume utile 5L), à une vitesse de rotation de 20 tours/minute, traversé entièrement par un flux d'air chaud de 150m$^3$/h à 55°C pour maintenir le lit de catalyseur à 45°C pendant la pulvérisation. Le flux d'air chaud se fait parallèlement au jet de pulvérisation, et dans le même sens (flux descendant).

Une solution de 750 g de résine de polyacrylate à 20% en poids dans l'acétate d'éthyle a été injectée sur les particules de catalyseur au moyen d'une buse d'atomisation, avec un débit de solution de 4 g/min.

Le solvant s'évapore en continu, ce qui conduit à la formation d'une couche de polymère à la surface des particules de catalyseur.

Après injection complète du liquide, le catalyseur est encore agité pendant 30 minutes à 45°C pour terminer son séchage, puis refroidi à température ambiante.

On a ainsi obtenu le catalyseur E conforme à l'invention, dont les particules sont recouvertes d'une couche continue de résine de polyacrylate dont l'épaisseur moyenne est de 18$\mu$m, telle qu'observée par microscopie électronique à balayage.

L'analyse du catalyseur E montre qu'il contient 3% en poids de carbone ce qui correspond à 5% en poids de polymère déposé sur le catalyseur par rapport au catalyseur de départ A.

Exemple 5 (comparatif) :

Dans cet exemple, un catalyseur comparatif F a été préparé, en appliquant au catalyseur activé A un procédé identique à celui décrit dans l'exemple 1 ci-avant, en remplaçant la solution aqueuse de polymère par de l'eau dé-ionisée (ne contenant pas de polymère):

3 kg du catalyseur A ont été placés dans un tambour entièrement perforé en inox ayant un volume de 18 litres (volume utile 5L), à une vitesse de rotation de 20 tours/minute, traversé entièrement par un flux d'air chaud de 160m$^3$/h à 90°C pour maintenir le lit de catalyseur à 70°C pendant la pulvérisation. Le flux d'air chaud se fait parallèlement au jet de pulvérisation, et dans le même sens (flux descendant).

Puis 900g d'eau dé-ionisée a été injectée sur les particules de catalyseur au moyen d'une buse bi-fluide d'atomisation, avec un débit de 7 g/min.

L'eau s'évapore en continu. Après injection complète du liquide, le catalyseur est encore agité pendant 30 minutes à 70°C pour terminer son séchage, puis refroidi à température ambiante.

On a ainsi obtenu le catalyseur F comparatif.

L'analyse du catalyseur F montre qu'il contient moins de 0,1% en poids de carbone.

Exemple 6: (comparatif) :

Dans cet exemple, un catalyseur comparatif F' a été préparé, en appliquant au catalyseur activé A un procédé analogue à celui décrit dans l'exemple 5 ci-avant :

3 kg du catalyseur A ont été placés dans un tambour entièrement perforé en inox ayant un volume de 18 litres (volume utile 5L), à une vitesse de rotation de 20 tours/minute, traversé entièrement par un flux d'air chaud de 160m$^3$/h à 130°C pour maintenir le lit de catalyseur à 100°C pendant la pulvérisation. Le flux d'air chaud se fait parallèlement au jet de pulvérisation, et dans le même sens (flux descendant).

Puis 900g d'eau dé-ionisée a été injectée sur les particules de catalyseur au moyen d'une buse bi-fluide d'atomisation, avec un débit de 7 g/min.

L'eau s'évapore en continu. Après injection complète du liquide, le catalyseur est encore agité pendant 30 minutes à 100°C pour terminer son séchage, puis refroidi à température ambiante.

On a ainsi obtenu le catalyseur F' comparatif.

L'analyse du catalyseur F' montre qu'il contient moins de 0,1% en poids de carbone.

Exemple 7 (comparatif) :

Dans cet exemple, un catalyseur comparatif G a été préparé, en traitant le catalyseur A de la manière suivante :

1 kg du catalyseur A ont été placés dans un tambour plein en inox ayant un volume de 3 litres, à une vitesse de rotation de 12 tours/minute, à température de 120°C sous atmosphère d'azote.

Puis 200g d'huile minérale (commercialisée sous la dénomination Lube Oil 600 Neutral par la société Total, ayant une viscosité à 40°C de 120 cP) ont été pulvérisés sur le catalyseur, avec un débit de 6g/min.

Après injection complète de l'huile, le catalyseur est refroidi à température ambiante.

On a ainsi obtenu le catalyseur comparatif G.

Exemple 8 : caractérisation des catalyseurs obtenus :

Les propriétés des catalyseurs A à G décrits dans les exemples 1 à 7 ci-avant ont été évaluées, en déterminant pour chacun les paramètres suivants :

- La température critique d'auto-échauffement CSHT (de l'anglais « Critical Self Heating Temperature ») :

Ce paramètre caractérise les propriétés d'auto-échauffement du catalyseur activé, à l'aide d'une procédure semblable à la norme UN (test décrit dans le document « Recommendation on the transport of dangerous goods. Manual for Tests and Criteria », ISSN 1014-7160, Section 33.3). Ce test CSHT peut être fait selon deux variantes, pour lesquelles seul le volume de l'échantillon varie. La procédure du test est la suivante :

Des échantillons de catalyseur ont été placés dans une boîte cubique en grille métallique, permettant le passage de l'air. Un thermocouple est placé dans l'échantillon, et la boîte est placée dans un four thermostaté.

Si la température du catalyseur n'est pas supérieure de plus de 60°C à celle du four pendant une période de 24h, le test est réitéré avec un nouvel échantillon du même catalyseur et en augmentant la température du four de 10°C.

On détermine ainsi la température T1, correspondant à la température du four la plus élevée atteinte, pour laquelle la température du catalyseur n'est pas supérieure à T1+ 60°C.

La température critique d'auto-échauffement CSHT est définie comme suit :

CSHT (°C) = T1 (°C) + 5°C.

Dans la première variante du test, la boîte cubique a un volume de 1L, et on notera par la suite la température obtenue CSHT-1L. Dans la seconde variante du test, la boîte cubique a un volume de 15mL, et on notera par la suite la température obtenue CSHT-15mL.

- L'activité en hydrodésulfuration :

L'activité en hydrodésulfuration de chaque catalyseur a été déterminée dans une unité pilote.

La charge utilisée est un gazole "straight run", qui présente les caractéristiques suivantes :

| | |
|---|---|
| Teneur en soufre (ppm en poids) | 11600 |
| Teneur en azote (ppm en poids) | 199 |
| Densité (g/mL) | 0,859 |

Pour chaque échantillon, le volume de catalyseur employé pour le test est de 10mL.

Lors du démarrage du test d'hydrodésulfuration, la charge gazole est injectée avec une VVH = 3 $h^{-1}$ et le réacteur est mis sous pression d'hydrogène (30.10$^5$ Pa) puis la température est augmentée à raison de 0,5°C/min jusqu'à 320°C. Le palier à 320°C est maintenu pendant 5h avant de passer aux conditions du test. Cette étape de démarrage standard pour un catalyseur activé est suffisante pour déprotéger les grains de catalyseur.

La charge de test est alors injectée pour démarrer le test proprement dit. Les conditions de test étaient les suivantes : pression de 4 MPa (40 bars), rapport $H_2$/gazole de 300, VVH = 2$h^{-1}$, température de 357 à 367°C, durée de test de 6 jours.

La teneur en soufre de la charge est mesurée en sortie d'unité au moyen d'un analyseur par fluorescence UV. Les constantes apparentes de la réaction de désulfuration ont été calculées selon la formule E1 ci-après :

$$K_v = \left( \frac{1}{\alpha - 1} \right) \left( \frac{1}{S^{\alpha-1}} - \frac{1}{S_0^{\alpha-1}} \right) * VVH \qquad (E1)$$

avec

$K_v$ = constante apparente de réaction

$\alpha$ = ordre de la réaction (considéré égal à 1,2)

$S$ = teneur en soufre des effluents

$S_0$ = teneur en soufre de la charge

VVH = vitesse volumique horaire de la charge liquide

Les performances de chaque échantillon ont été évaluées par rapport à celle d'un catalyseur de référence. Pour cela, l'activité relative volumique (notée RVA pour "Relative Volume Activity") a été calculée selon la formule E2 suivante :

$$RVA = \frac{Kv(\text{échantillon})}{Kv(\text{référence})} \times 100 \qquad (E2)$$

Comme référence, a été attribuée la valeur $K_v$ de 100 au catalyseur A activé.

- Les émissions de $SO_2$ à basse température:

Un échantillon de 25g de catalyseur est pesé puis placé dans un récipient de IL sous air qui est ensuite étanché à l'aide d'un bouchon équipé d'un septum. Le récipient est ensuite placé dans une étuve thermostatée à 50°C pendant 24h. Au bout de 24h, le récipient est sorti et laissé à refroidir à la température ambiante. On effectue alors une analyse de $SO_2$ sur le gaz contenu dans le récipient, par prélèvement à travers le septum à l'aide d'une seringue. L'analyse du gaz donne directement le résultat en ppm de $SO_2$ émis par le catalyseur.

Pour chaque catalyseur, on a déterminé immédiatement après sa préparation les deux températures critiques d'auto-échauffement (CSHT-1L et CSHT-15mL), l'activité RVA et la formation de $SO_2$.

Les résultats obtenus pour chaque catalyseur sont rassemblés dans le Tableau 1 ci-dessous :

Tableau 1

| Catalyseur | Couche protectrice | Equipement | CSHT IL | CSHT 15mL | Activité RVA | Emissions $SO_2$ |
|---|---|---|---|---|---|---|
| A (catalyseur de départ) | | | 65°C | 115°C | 100 | 150 ppm |
| B (invention) | EVOH | Tambour perforé | 125°C | > 220°C | 98 | 0,2 ppm |
| C (comparatif) | EVOH | Tambour plein | 85°C | 155°C | 99 | 15 ppm |
| D (comparatif) | Polyacrylate | Tambour plein | 85°C | 145°C | 84 | 50 ppm |
| E (invention) | Polyacrylate | Tambour perforé | 105°C | 205°C | 88 | 4 ppm |
| F (comparatif) | - | Tambour perforé | 65°C | 115°C | 101 | 150 ppm |
| F' (comparatif) | - | Tambour perforé | 85°C | 145°C | 98 | 460 ppm |
| G (comparatif) | Huile | Tambour plein | 85°C | 145°C | 98 | 120 ppm |

Les résultats ci-dessus montrent que le catalyseur A activé présente une température critique d'auto-échauffement basse (65°C), typique de ce type de catalyseur à l'état fraîchement activé puis stabilisé à l'air.

La protection assurée au moyen d'une couche de polymère filmogène (catalyseur B et catalyseur E conformes à l'invention), obtenue à l'aide du procédé selon la présente invention, permet de diminuer de manière particulièrement efficace l'auto-échauffement du catalyseur activé A : la température critique d'auto-échauffement sur boîte de 1L est augmentée de manière importante, puisqu'elle est de 125°C pour le catalyseur B et de 105°C pour le catalyseur E.

De plus, ces deux catalyseurs présentent une émission de $SO_2$ bien inférieure au catalyseur A de départ, en dessous du seuil de 5 ppm.

Comparativement, les catalyseurs C et D non conformes à l'invention, dont la protection a été effectuée dans un tambour plein, pour lequel les grains de catalyseur ne sont pas traversés par le flux d'air, présentent un caractère auto-échauffant bien supérieur, avec des CSHT-1L de 85°C. De plus, l'émission de $SO_2$ reste importante dans les deux cas (15 et 50 ppm). Ces deux exemples démontrent donc l'importance de réaliser le procédé selon l'invention en faisant circuler un flux d'air au travers des particules de catalyseur pendant la pulvérisation de la composition contenant le polymère filmogène.

Les catalyseurs F et F' correspondent à des tests « à blanc », permettant de vérifier de manière simple l'impact des conditions d'enrobage en elles-mêmes (pulvérisation d'eau et débit d'air chaud) sur les propriétés du catalyseur. Les propriétés d'auto-échauffement de ces deux catalyseurs, dont les CSHT-1L respectives sont de 65 et 85°C, sont cohérentes avec les méthodes de passivation par oxydation de la phase active, déjà connues dans l'art antérieur. Les émissions de $SO_2$ sont fortement augmentées pour le catalyseur F', ce qui peut s'expliquer par la stabilisation oxydante relativement poussée de la phase active, lorsque le catalyseur A a été placé à 100°C sous flux d'air.

L'emploi d'huile minérale comme matériau protecteur conduit également à une augmentation modérée de la température critique d'auto-échauffement et à une faible diminution des émissions de $SO_2$, à des valeurs qui restent faibles en comparaison de celles atteintes pour les catalyseurs B et E selon l'invention mettant en œuvre des polymères filmogènes.

**Revendications**

1. Procédé d'enrobage visant à limiter l'auto-échauffement de catalyseurs activés sous forme de particules, dans lequel les particules de catalyseur sont placées en mouvement soit dans un tambour perforé traversé en continu par un flux de gaz de température supérieure à 25°C soit en lit fluidisé au moyen d'un flux de gaz de température supérieure à 25°C, tandis qu'une composition liquide contenant un ou plusieurs polymère(s) filmogène(s) est pulvérisée sur les particules en mouvement, jusqu'à l'obtention sur la surface desdites particules d'une couche protectrice contenant ledit polymère filmogène et présentant une épaisseur moyenne allant de 0,1 à 20 µm.

2. Procédé selon la revendication 1, **caractérisé en ce que** la composition liquide est une solution ou une dispersion du (des) polymère(s) filmogène(s) dans un solvant, et contient de préférence de 0,1 à 50% en poids de polymère filmogène, plus préférentiellement de 0,5 à 25% en poids, et encore plus préférentiellement de 1 à 10% en poids de polymère filmogène, par rapport au poids total de la composition.

4. Procédé selon l'une quelconque des revendications précédentes, **caractérisé en ce que** le flux de gaz traversant les particules de catalyseur présente une température allant de 30 à 150°C, et de préférence de 50 à 100°C.

5. Procédé selon l'une quelconque des revendications précédentes, **caractérisé en ce que** le débit du flux de gaz est de 5 à 100 $m^3$ par heure et par kilogramme de catalyseur.

6. Procédé selon l'une quelconque des revendications précédentes, **caractérisé en ce que** la couche protectrice comprend de 50 à 100% en poids d'un ou plusieurs polymère(s) filmogène(s), et de préférence la couche protectrice est entièrement constituée d'un ou plusieurs polymère(s) filmogène(s).

7. Procédé selon l'une quelconque des revendications précédentes, **caractérisé en ce que** le ou les polymère(s) filmogène(s) sont choisis parmi :

   - les homo et co-polymères d'alcool vinylique, tels que les alcools polyvinyliques et les copolymères formés de monomères alcool vinylique et oléfine(s), tels que copolymères formés de monomères alcool vinylique et éthylène (copolymères EVOH);
   - les homo et co-polymères d'alcool vinylique partiellement hydrolysés, contenant des motifs acétate de vinyle non hydrolysés ;
   - les polyéthylène glycols ;
   - le collagène ;
   - les polyéthylène téréphtalates (PET) ;
   - les polyéthylène naphtalates (PEN) ;
   - les polyamides ;
   - les polysaccharides, en particulier les polymères cellulosiques et leurs dérivés (parmi lesquels en particulier les $C_1$-$C_4$ alkyl-celluloses et plus particulièrement les méthyl-celluloses), et les amidons éventuellement modifiés ;
   - les polychlorure de vinyles (PVC) ;
   - les polychlorure de vinylidènes (PVDC) ;
   - les polyacrylonitriles (PAN) ;
   - les résines de polyacrylates, telles qu'en particulier les polyacrylates de méthyle ;
   - les copolymères dont au moins un des monomères est de type acrylate ;
   - et leurs mélanges.

8. Procédé selon la revendication précédente, **caractérisé en ce que** le polymère filmogène est choisi parmi les alcools polyvinyliques et les copolymères formés de monomères alcool vinylique et oléfine(s), et de préférence parmi les copolymères formés de monomères alcool vinylique et éthylène (copolymères EVOH).

9. Procédé selon l'une quelconque des revendications précédentes, **caractérisé en ce que** l'épaisseur moyenne de la couche protectrice est inférieure ou égale à 10 $\mu$m, de préférence va de 0,2 à 10 $\mu$m, et mieux encore va de 0,5 à 8 $\mu$m.

10. Procédé selon l'une quelconque des revendications précédentes, **caractérisé en ce que** la quantité totale de polymère filmogène employé va de 0,1 à 6 % en poids, de préférence de 0,5 à 4 % en poids, et de manière encore plus préférée de 1 à 3 % en poids, par rapport au poids total du catalyseur initial.

**Patentansprüche**

1. Beschichtungsverfahren zur Begrenzung der Eigenerwärmung von aktivierten Katalysatoren in Form von Partikeln, in welchem die Partikel des Katalysators in Bewegung platziert werden, entweder in einer perforierten Trommel, durchgehend durchdrungen von einem Gasstrom mit einer Temperatur von über 25 °C oder in einer Wirbelschicht eines Gasstroms mit einer Temperatur von über 25 °C, wobei ein flüssiges Gemisch, ein oder mehrere filmbildende/s Polymer(e) enthaltend, auf den Partikeln in Bewegung pulverisiert wird, bis zum Erhalt einer Schutzschicht auf der Oberfläche der Partikel, das filmbildende Polymer enthaltend und eine mittlere Dicke zwischen 0,1 und 20 $\mu$m

aufweisend.

**2.** Verfahren nach Anspruch 1, **dadurch gekennzeichnet, dass** das flüssige Gemisch eine Lösung oder eine Dispersion des filmbildenden Polymers/der filmbildenden Polymere in einem Lösungsmittel ist und bevorzugt von 0,1 bis 50 Gew.-% filmbildendes Polymer umfasst, bevorzugter 0,5 bis 25 Gew.-%, und noch bevorzugter von 1 bis 10 Gew.-% filmbildendes Polymer im Verhältnis zum Gesamtgewicht des Gemisches.

**4.** Verfahren nach einem der vorhergehenden Ansprüche, **dadurch gekennzeichnet, dass** der die Partikel des Katalysators durchdringende Gasstrom eine Temperatur von 30 bis 150 °C und bevorzugt zwischen 50 und 100 °C aufweist.

**5.** Verfahren nach einem der vorhergehenden Ansprüche, **dadurch gekennzeichnet, dass** der Gasstrom von 5 bis 100 $m^3$ pro Stunde und pro Kilogramm des Katalysators beträgt.

**6.** Verfahren nach einem der vorhergehenden Ansprüche, **dadurch gekennzeichnet, dass** die Schutzschicht von 50 bis 100 Gew.-% eines filmbildenden Polymers/mehrerer filmbildender Polymere umfasst, und bevorzugt die Schutzschicht vollständig aus einem oder mehreren filmbildenden Polymer(en) zusammengesetzt ist.

**7.** Verfahren nach einem oder mehreren der vorhergehenden Ansprüche, **dadurch gekennzeichnet, dass** das oder die filmbildende(n) Polymer(e) ausgewählt sind aus:

- Homo- und Copolymeren aus Vinylalkohol wie Polyvinylalkoholen und aus Vinylalkohol und Olefin(en) Monomeren gebildeten Copolymeren, wie aus Vinylalkohol und Ethylen Monomeren gebildete Copolymere (EVOH-Copolymere);
- teilweise hydrolysierten Homo- und Copoloymeren aus Vinylalkoholen, umfassend nicht hydrolysierte Vinylacetat-Motive;
- Polyethylenglykolen,
- Kollagen,
- Polyethylenterephthalaten (PET);
- Polyethylennaphthalaten (PEN);
- Polyamiden;
- Polysacchariden, vornehmlich cellulosischen Polymeren und ihren Derivaten (darunter vornehmlich $C_1$-$C_4$-Alkylcellulosen und vornehmlicher Methyl-Cellulosen) und Stärken, gegebenenfalls modifiziert;
- Polyvinylchloriden (PVC);
- Polyvinylidenchloriden (PVCD);
- Polyacrylnitrilen (PAN);
- Harzen von Polyacrylaten, wie vornehmlich Methylpolyacrylaten;
- Copolymeren, von denen wenigstens eines der Monomere vom Typ Acrylat ist;
- und deren Mischungen.

**8.** Verfahren nach dem vorhergehenden Anspruch, **dadurch gekennzeichnet, dass** das filmbildende Polymer ausgewählt ist aus Polyvinylalkoholen und Copoloymeren, ausgebildet aus Vinylalkohol und Olelfin(en) Monomeren, und bevorzugt unter Copolymeren ausgebildet aus Vinylalkohol und Ethylen Monomeren (EVOH-Copolymeren).

**9.** Verfahren nach einem der vorhergehenden Ansprüche, **dadurch gekennzeichnet, dass** die mittlere Dicke der Schutzschicht geringer oder gleich 10 μm ist, bevorzugt von 0,2 bis 10 μm reicht, und noch besser von 0,5 bis 8 μm reicht.

**10.** Verfahren nach einem der vorhergehenden Ansprüche, **dadurch gekennzeichnet, dass** die Gesamtmenge des filmbildenden Polymers von 0,1 bis 6 Gew.-%, bevorzugt von 0,5 bis 4 Gew.-% reicht, und noch bevorzugter von 1 bis 3 Gew.-% im Verhältnis zum Gesamtgewicht des initialen Katalysators.

## Claims

**1.** Coating method aimed at limiting the self-heating of activated catalysts in particle form, wherein the catalyst particles are placed in motion either in a perforated drum traversed continuously by a gas flow of temperature greater than 25°C or in a fluidised bed by means of a gas flow of temperature greater than 25°C, whereas a liquid composition containing one or more film-forming polymer(s) is sprayed onto the particles in motion, until a protective layer containing said film-forming polymer and having a mean thickness ranging from 0.1 to 20 $\mu$m is obtained on the surface of said particles.

2. Method according to claim 1, **characterised in that** the liquid composition is a solution or a dispersion of the film-forming polymer(s) in a solvent, and contains preferably from 0.1 to 50% by weight of film-forming polymer, more preferentially from 0.5 to 25% by weight, and even more preferentially from 1 to 10% by weight of film-forming polymer, with respect to the total weight of the composition.

4. Method according to any one of the preceding claims, **characterised in that** the gas flow passing through the catalyst particles has a temperature ranging from 30 to 150°C, and preferably from 50 to 100°C.

5. Method according to any of the preceding claims, **characterised in that** the flow rate of the gas flow is from 5 to 100 m$^3$ per hour and per kilogram of catalyst.

6. Method according to any one of the preceding claims, **characterised in that** the protective layer comprises from 50 to 100% by weight of one or more film-forming polymer(s), and preferably the protective layer consists entirely of one or more film-forming polymer(s).

7. Method according to any one of the preceding claims, **characterised in that** the film-forming polymer(s) are selected from:

- vinyl alcohol homo and co-polymers, such as polyvinyl alcohols and copolymers formed from vinyl alcohol and olefin(s) monomers, such as copolymers formed from vinyl alcohol and ethylene monomers (EVOH copolymers);
- partially hydrolysed vinyl alcohol homo and co-polymers, containing non-hydrolysed vinyl acetate units;
- polyethylene glycols;
- collagen;
- polyethylene terephthalates (PET);
- polyethylene naphthalates (PEN);
- polyamides;
- polysaccharides, in particular cellulose polymers and derivatives thereof (of which in particular $C_1$-$C_4$ alkyl-celluloses and more particularly methyl-celluloses), and optionally modified starches;
- polyvinyl chlorides (PVC);
- polyvinylidene chlorides (PVDC);
- polyacrylonitriles (PAN);
- polyacrylate resins, such as in particular methyl polyacrylates;
- copolymers of which at least one of the monomers is of the acrylate type;
- and mixtures thereof.

8. Method according to the preceding claim, **characterised in that** the film-forming polymer is selected from polyvinyl alcohols and copolymers formed from vinyl alcohol and olefin(s) monomers, and preferably from copolymers formed from vinyl alcohol and ethylene monomers (EVOH copolymers).

9. Method according to any one of the preceding claims, **characterised in that** the mean thickness of the protective layer is less than or equal to 10 $\mu$m, preferably ranges from 0.2 to 10 $\mu$m, and more preferably ranges from 0.5 to 8 $\mu$m.

10. Method according to any one of the preceding claims, **characterised in that** the total quantity of film-forming polymer used ranges from 0.1 to 6% by weight, preferably from 0.5 to 4% by weight, and even more preferably from 1 to 3% by weight, with respect to the total weight of the initial catalyst.

## RÉFÉRENCES CITÉES DANS LA DESCRIPTION

**Documents brevets cités dans la description**

- US 5681787 A
- US 3453217 A
- EP 0897748 A1

**Littérature non-brevet citée dans la description**

- *Recommendation on the transport of dangerous goods. Manual for Tests and Criteria,* ISSN 1014-7160